# EUROPÄISCHE PATENTSCHRIFT

(11) **EP 1 352 600 B1**
(45) Veröffentlichungstag und Bekanntmachung des Hinweises auf die Patenterteilung: **03.08.2005**
(21) Anmeldenummer: 03005999.2
(22) Anmeldetag: 18.03.2003
(51) Int. Cl.: A47J 36/26

(54) **Einrichtung zum servierfähigen Bereithalten von Speisen**
Device for keeping food ready for service
Dispositif pour le maintien à l'ètat prèsentable d'aliments

(30) Priorität: 12.04.2002 DE 10216238; 27.09.2002 DE 10245280
(43) Veröffentlichungstag der Anmeldung: 15.10.2003
(73) Patentinhaber: Electrolux Professional GmbH, 22547 Hamburg (DE)
(72) Erfinder: Baumann, Udo, 22459 Hamburg (DE)
(74) Vertreter: Baumgartl, Gerhard Willi

(56) Entgegenhaltungen:
- DE-A- 19 945 498
- FR-A- 2 604 882
- US-A- 3 214 922
- US-A- 5 941 077

## Beschreibung

Die Erfindung betrifft eine Einrichtung zum servierfähigen Bereithalten von Speisen

In Großküchen ist es üblich geworden, Speisen einige Tage vor dem Servieren vorzubereiten und zu frieren, um sie einige Stunden vor dem Servieren zu entnehmen, zu portionieren, anzurichten und bis zum Servieren auf Platten abzustellen, die sowohl ein Kühlen als auch ein Wiedererhitzen und Warmhalten erlauben.

Ein bekanntes Erwärmungs- und Kühlungstablett für das Servieren von Speisen gemäß US 5,941,077 weist hierzu zwei in einem Gehäuse aufgenommene wärmeleitende Platten, zwei unter den Platten angeordnete Peltierelemente, eine die Peltierelemente in einen Plattenkühl- oder Plattenerwärmungsmodus schaltende Steuerung und Bedienelemente zur Wahl des jeweiligen Modus bzw. der gewünschten Temperatur auf.

Mit derartigen Erwärmungs- und Kühlungstabletts lassen sich jedoch an den Platten keine Temperaturen erzielen, die im Inneren der Speisen Serviertemperaturen ermöglichen, die unter hygienischen Gesichtspunkten den aktuellen Forderungen entsprechen, beispielsweise 65 °C in Europa.

Aus der DE-A-199 45 498 ist eine Vorrichtung zur Temperierung oral zu verabreichender Medien bekannt, bei der Heizelemente zur Übertragung von Wärme und Peltierelemente zur Übertragung von Kälte vorgesehen sind, wobei eine Steuerung gemäß gewählter Modi "Abkochen", "Temperatureinstellung" und "Automatik" die Heizelemente zum Heizen und die Peltierelemente lediglich zum Kühlen anregen kann.

Der Erfindung liegt die Aufgabe zugrunde, eine Einrichtung zum servierfähigen Bereithalten von Speisen zu schaffen, mit der aktuellen Hygieneforderungen entsprochen werden kann.

Erfindungsgemäß wird diese Aufgabe durch die Merkmale des Anspruchs 1 erfüllt. Vorteilhafte Ausbildungen ergeben sich aus den Unteransprüchen.

Die Einrichtung zum servierfähigen Bereithalten von Speisen besitzt
- eine oder mehrere wärmeübertragende Platten, auf der die Speisen direkt oder in Gefäßen servierfähig aufnehmbar sind,
- ein oder mehrere Peltierelemente oder dgl. und ein oder mehrere Heizelemente, die jeweils thermisch an die Platte und/oder die Gefäße gekoppelt oder koppelbar sind,
- ein oder mehrere Bedienelemente bzw. Funkempfänger von Bedienelementen, mit denen Temperaturen und/oder Temperaturzyklen und/oder Warm- bzw. Kalt-Modi der Platte wählbar sind, und
- eine Steuerung, mit der entsprechend der an den Bedienelementen vorgenommenen Wahl das oder die Peltierelemente zum Kühlen der Platte(n) anregbar sind und das oder die Peltierelemente und/oder das oder die Heizelemente zum Erhitzen der Platte(n) anregbar sind.

Indem die Platte(n) unter dem Einfluss der Heizelemente schneller und/oder auf höhere Temperaturen erhitzbar ist (sind) als mit dem oder den Peltierelementen allein, lassen sich im Inneren der Speisen Temperaturen erzielen, die den aktuellen Hygieneforderungen entsprechen.

Das oder die Heizelemente sind insbesondere an der Unterseite der Platte(n) angeordnet und vorzugsweise als Flächen- und/oder Folien- und/oder Dünnschicht- und/oder Siebdruckheizung ausgebildet.

Die Platte(n) ist (sind) vorzugsweise aus Glaskeramik, kann (können) aber auch aus Metall oder aus Glas, Keramik oder Stein sein. Sie ist (sind) vorzugsweise auf einem horizontal umlaufenden Rahmen aufgenommen, der auf einem nach unten geschlossenen Unterteil ruht.

Die Platte(n) kann (können) mit dem Rahmen und/oder der Rahmen mit dem Unterteil verschnappbar sein. Die Abmessungen des Rahmens und/oder des Unterteils entsprechen insbesondere einem oder mehreren Rastern der Gastronomienorm.

Der Rahmen und das Unterteil sind seitlich gesehen insbesondere spiegelsymmetrisch ausgebildet. Der Rahmen nimmt vorzugsweise die Bedienelemente und/oder deren Funkempfänger und/oder die Steuerung auf, das Unterteil insbesondere eine Stromversorgung und/oder ein Kühlgebläse. An der Unterseite des Unterteils sind zwei zueinander parallele Kufen ausgebildet.

Das oder die Peltierelemente sind insbesondere an der Unterseite der Platte(n) und/oder an der Unterseite des oder der Heizelemente angeordnet.

Das Erhitzen der Platte(n) kann entsprechend der gewählten Temperatur und/oder des gewählten Temperaturzyklus mit dem oder den Peltierelementen erfolgen. Die gewählten Temperaturen und/oder Temperaturzyklen sind dann insbesondere Warmhaltetemperaturen bzw. Warmhaltezyklen.

Es ist aber auch möglich, das Erhitzen der Platte(n) entsprechend der gewählten Temperatur und/oder des gewählten Temperaturzyklus entweder nur mit dem oder den Heizelementen durchzuführen oder sowohl mit dem oder den Peltierelementen als auch mit dem oder den Heizelementen. Die gewählten Temperaturen und/oder Temperaturzyklen sind dann beispielsweise Warmhalte- oder Gartemperaturen bzw. Warmhalte- oder Garzyklen, wobei Warmhaltetemperaturen und Warmhaltezyklen schneller erreichbar bzw. verzögerungsfreier steuerbar sind als bei der reinen Anwendung von Peltierelementen.

Die Erfindung wird nachstehend anhand eines Ausführungsbeispiels näher erläutert. In den zugehörigen schematischen Zeichnungen zeigen:
Fig. 1 eine Heiß-Kalt-Platte von rechts schräg oben mit der Vorderseite,

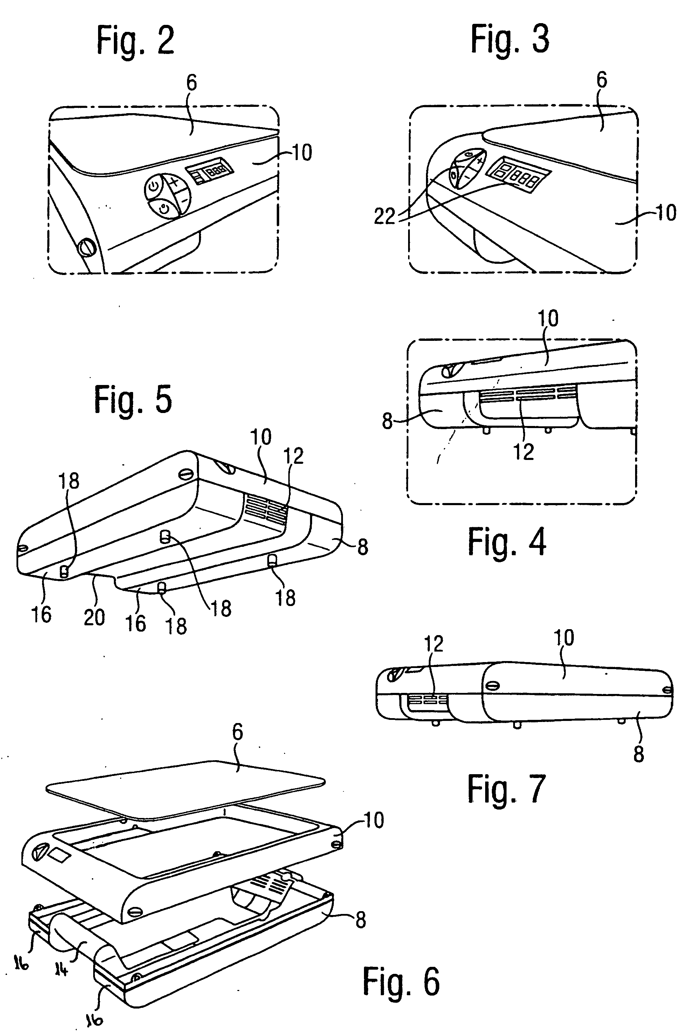

Fig. 2 die Heiß-Kalt-Platte von links schräg oben mit der Vorderseite,
Fig. 3 das Anzeige- und Bedienfeld,
Fig. 4 die Vorderseite,
Fig. 5 die Heiß-Kalt-Platte von links schräg unten mit der Vorderseite,
Fig. 6 die Heiß-Kalt-Platte in Explosivdarstellung von rechts schräg oben mit der Vorderseite und
Fig. 7 die Heiß-Kalt-Platte von schräg rechts mit der Vorderseite und einer Längsseite.

Die äußere Form der Heiß-Kalt-Platte 2 ist durch ein Edelstahlgehäuse 4 oder ein Gehäuse 4 aus ABS-Kunststoff bestimmt, das auf seiner Oberseite eine Glaskeramikplatte 6 aufnimmt. Das Gehäuse 4 besteht aus einem nach unten und zu den Seiten hin geschlossenen wannenförmigen Unterteil 8 und einem nur zu den Seiten hin geschlossenen rahmenartigen Oberteil 10. Die oberen Ränder des Unterteils 8 und die unteren Ränder des Oberteils 10 sind zumindest teilweise derart nach innen versetzt, dass beide Teile formschlüssig aufeinander sitzen.

Das Unterteil 8 ist vorn und hinten mit Kühlgittern 12 versehen. Es nimmt ein nicht dargestelltes Gebläse und eine ebenfalls nicht dargestellte Stromversorgung auf. An seiner Vorderseite ist darüber hinaus ein griffartiges Element 14 ausgebildet, das sich über seinen oberen Rand erhebt und im montierten Zustand vollständig im Oberteil 10 aufgenommen ist. Seine Unterseite ist in Längsrichtung dreigeteilt, und zwar in zwei breite äußere Kufen 16 mit punktartigen Füßen 18 und einen Zwischenraum 20, der in seiner Breite mit dem griffartigen Element 14 fluchtet. Die Längsseiten verlaufen senkrecht, die Vorder- und Hinterseite sind von unten her spiegelbildlich voneinander weggewölbt.

Das Oberteil 10 weist ebenfalls senkrechte Längsseiten und von oben her spiegelbildlich voneinander weggewölbte Querseiten auf. In der vorderen Querseite sind eine Bedien- und/oder Anzeigeeinheit 22 und eine nichtdargestellte Steuerung aufgenommen. Die Längs- und Querseiten erheben sich um einen Bruchteil der Dicke der Glaskeramikplatte 6 über deren umlaufender Auflagefläche.

An der Unterseite der Glaskeramikplatte 6 befindet sich eine nichtdargestellte Folienheizung, an deren Unterseite zwei nichtdargestellte Peltierelemente angeordnet sind. Sowohl die Folienheizung als auch die Peltierelemente füllen die Plattenfläche vollständig aus.
Peltierelemente sind thermoelektrische Wandlerelemente, die auf dem Peltiereffekt beruhen und sowohl zum Kühlen als auch zum Heizen geeignet sind, indem sich zwischen ihren Elektroden eine Temperaturdifferenz ausbildet, deren Richtung von der Stromrichtung abhängt. Insoweit befindet sich eine flächenhaft ausgebildete Elektrode an der Glaskeramikplatte, während die andere flächenhafte Elektrode dem Unterteil und damit dem Kühlgebläse zugewandt ist.

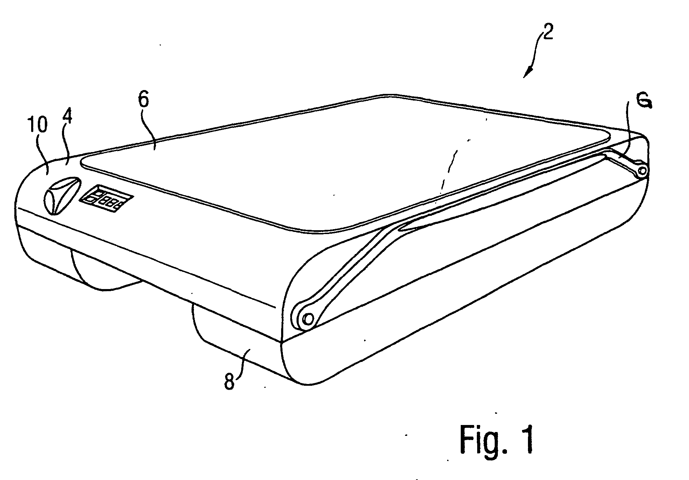

Fig. 1 zeigt an den Seiten zusätzlich montierbare Gleitschienen G, die es ermöglichen, dass die Platte in Gastronom-Einheiten oder Back- und Euronorm-Einheiten maßlich einschiebbar ist, auch speziell unter sogenannte ,chafing dishes' (Behälter zum Warmhalten von Speisen).

Die Wirkungsweise ist folgende:

Sind auf der Platte bzw. auf oder in einem auf der Platte abgestellten Gefäß Speisen angerichtet, die warm serviert werden sollen, gibt es an den Bedienelementen 22 wenigstens drei Wahlmöglichkeiten.

In einem ersten Fall wird an den Bedienelementen 22 zunächst kurz vor dem Servieren ein Modus zum Wiedererhitzen oder Warmhalten der Speisen im Peltierverfahren eingestellt, so dass die Steuerung auf eine vorbestimmte Erwärmungstemperatur zurückgreif, um die Peltierelemente bzw. deren an der Glaskeramikplatte anliegenden Elektroden in einen entsprechenden Wärmemodus zu schalten. Sollte die vorgegebene Erwärmungs- oder Gartemperatur von den Peltierelementen nicht erreichbar sein, schaltet die elektronische Regelung automatisch auf die Alternativ-Heizung um. Die sich an der Elektrode entwickelnde Wärme überträgt sich dann über die Glaskeramikplatte ebenso an die Speisen bzw. die die Speisen aufnehmenden Gefäße wie sich die von der Folienheizung ausgehende Wärme auf die Speisen bzw. Gefäße überträgt.

In einem zweiten Fall lassen sich an den Bedienelementen 22 zunächst konkrete Kühltemperaturen und dann konkrete Wiedererhitzungstemperaturen einstellen, so dass die Peltierelemente und die Folienheizung entsprechend der eingestellten Temperaturen angesteuert werden.

In einem dritten Fall schließlich kann an den Bedienelementen 22 ein Temperaturzyklus zum Kühlen durch das Peltiersystem eingestellt werden.

Sind auf der Platte bzw. auf oder in einem auf der Platte abgestellten Gefäß Speisen angerichtet, die in einigen Stunden kalt serviert werden sollen, gibt es an den Bedienelementen 22 wiederum wenigstens drei Wahlmöglichkeiten.

In einem ersten Fall wird an den Bedienelementen 22 lediglich ein Kühlmodus eingestellt, so dass die Steuerung auf eine vorbestimmte Kühltemperatur zurückgreift, um die Peltierelemente bzw. deren an der Glaskeramikplatte anliegenden Elektroden in einen entsprechenden Kühlmodus zu schalten. Die sich an der Elektrode entwickelnde Kälte überträgt sich dann wiederum über die Glaskeramikplatte an die Speisen bzw. die die Speisen aufnehmenden Gefäße.

In einem zweiten Fall lassen sich an den Bedienelementen 22 konkrete Kühltemperaturen einstellen, so dass die Peltierelemente entsprechend der eingestellten Temperaturen angesteuert werden.

In einem dritten Fall schließlich kann an den Bedienelementen 22 ein Temperaturzyklus eingestellt werden, der beispielsweise Kühltemperaturen bereitstellt, die kurz vor dem Servieren etwas ansteigen.

Die Bedienelemente 22 lassen darüber hinaus die Eingabe von Kühl- und/oder Erwärmungsdauern und/oder konkreten Servierzeiten zu.

## Patentansprüche

1. Einrichtung zum servierfähigen Bereithalten von Speisen, mit
- einer oder mehreren wärmeübertragenden Platten (6), auf der die Speisen direkt oder in Gefäßen servierfähig aufnehmbar sind,
- einem oder mehreren Peltierelementen oder dgl. und einem oder mehreren Heizelementen, die jeweils thermisch an die Platte(n) (6) und/oder die Gefäße gekoppelt oder koppelbar sind,
- einem oder mehreren Bedienelementen (22) bzw. Funkempfängern von Bedienelementen, mit denen Temperaturen und/oder Temperaturzyklen und/oder Warm- bzw. Kalt- Modi der Platte(n) (6) wählbar sind, **gekennzeichnet durch**
eine Steuerung, die entsprechend der an den Bedienelementen (22) vorgenommenen Wahl folgende Anregungskombinationen steuern kann:
- Kühlen der Platte(n) **durch** das oder die Peltierelemente - Erhitzen der Platte(n) **durch** das oder die Peltierelemente - Erhitzen der Platte(n) **durch** das oder die Peltierelemente und das oder die Heizelemente - Erhitzen der Platte(n) **durch** das oder die Heizelemente.

2. Einrichtung nach Anspruch 1, bei der die Platte(n) (6) unter dem Einfluss des oder der Heizelemente schneller und/oder auf höhere Temperaturen erhitzbar ist (sind) als nur mit dem oder den Peltierelementen.

3. Einrichtung nach Anspruch 1 oder 2, bei der das oder die Heizelemente an der Unterseite der Platte(n) (6) angeordnet sind.

4. Einrichtung nach einem der Ansprüche 1 bis 3, bei der das oder die Heizelemente als Flächen- und/oder Folien- und/oder Dünnschicht- und/oder Siebdruckheizung ausgebildet sind.

5. Einrichtung nach einem der Ansprüche 1 bis 4, bei der die Platte(n) (6) aus Glaskeramik ist (sind).

6. Einrichtung nach einem der Ansprüche 1 bis 5, bei der die Platte(n) (6) auf einem horizontal umlaufenden Rahmen (10) aufgenommen ist (sind), der auf einem nach unten geschlossenen Unterteil (8) ruht.

7. Einrichtung nach Anspruch 6, bei der die Platte(n) (6) mit dem Rahmen (10) und/oder der Rahmen (10) mit dem Unterteil (8) verschnappbar sind.

8. Einrichtung nach Anspruch 6 oder 7, bei der die Abmessungen des Rahmens (10) incl. der Gleitschienen und/oder des Unterteils (8) einem oder mehreren Rastern der Gastrononorm, Backnorm oder Euro-Norm entspricht.

9. Einrichtung nach einem der Ansprüche 6 bis 8, bei der der Rahmen (10) und das Unterteil (8) seitlich gesehen spiegelsymmetrisch ausgebildet sind.

10. Einrichtung nach einem der Ansprüche 6 bis 9, bei der der Rahmen (10) die Bedienelemente (22) und/oder deren Funkempfänger und/oder die Steuerung aufnimmt.

11. Einrichtung nach einem der Ansprüche 6 bis 10, bei der das Unterteil (8) eine Stromversorgung und/oder ein Kühlgebläse aufnimmt. gebläse aufnimmt.

12. Einrichtung nach einem der Ansprüche 6 bis 11, bei der das Unterteil (8) an seiner Unterseite zwei zueinander parallele Kufen (16) und insbesondere justierbare Aufstellfüße aufweist.

13. Einrichtung nach einem der Ansprüche 1 bis 12, bei der das oder die Peltierelemente an der Unterseite der Platte(n) (6) und/oder an der Unterseite des oder der Heizelemente angeordnet sind.

14. Einrichtung nach einem der Ansprüche 1 bis 13, bei der das Erhitzen der Platte(n) (6) entsprechend der gewählten Temperatur und/oder des gewählten Temperaturzyklus mit dem oder den Peltierelementen erfolgt.

15. Einrichtung nach Anspruch 14, bei der die gewählten Temperaturen und/oder Temperaturzyklen Warmhaltetemperaturen bzw. Warmhaltezyklen sind.

16. Einrichtung nach einem der Ansprüche 1 bis 15, bei der das Erhitzen der Platte(n) (6) entsprechend der gewählten Temperatur und/oder des gewählten Temperaturzyklus mit dem oder den Heizelementen erfolgt, wobei insbesondere Gartemperaturen über 100 °C erreichbar sind.

17. Einrichtung nach einem der Ansprüche 1 bis 16, bei der das Erhitzen der Platte(n) (6) entsprechend der gewählten Temperatur und/oder des gewählten Temperaturzyklus sowohl durch das oder die Peltierelemente als auch durch das oder die Heizelemente erfolgt.

18. Einrichtung nach Anspruch 16 oder 17, bei der die gewählten Temperaturen und/oder Temperaturzyklen Warmhalte- oder Gartemperaturen bzw. Warmhalte- oder Garzyklen sind.

19. Einrichtung nach einem der Ansprüche 1 bis 18, bei der das Kühlen der Platte(n) entsprechend dwer gewählten Temperatur und/oder des gewählten Temperaturzyklus mit dem oder den Peltierelementen erfolgt.

20. Einrichtung nach Anspruch 19, bei der die gewählten Temperaturen und/oder Temperaturzyklen Kühltemperaturen bzw. Kühlzyklen sind.

## Claims

1. Device for keeping food ready to serve, comprising
- one or more heat-transmitting trays (6), on which the food can be received directly or in containers ready to serve,
- one or more Peltier elements or the like and one or more heating elements, each of which is coupled or is couplable thermally to the tray(s) (6) and/or the containers,
- one or more operating elements (22) or radio receivers of operating elements, with which temperatures and/or temperature cycles and/or hot or cold modes of the tray(s) (6) are selectable,
**characterised by** a control which can control the following combinations of impulses according to the operating elements (22):
- cooling of the tray(s) by the Peltier element(s)
- heating of the tray(s) by the Peltier element(s)
- heating of the tray(s) by the Peltier element(s) and the heating element(s)
- heating of the tray(s) by the heating element(s).

2. Device according to claim 1, in which the tray(s) (6) is/are heatable more rapidly and/or to higher temperatures under the effect of the heating element(s) than only with the Peltier element(s).

3. Device according to claim 1 or 2, in which the heating element(s) is/are disposed on the underside of the tray(s) (6).

4. Device according to one of claims 1 to 3, in which the heating element(s) is/are formed as electric conductive sheet-type heating elements and/or foil heating elements and/or thin film heating elements and/or screen heating elements.

5. Device according to one of claims 1 to 4, in which the tray(s) (6) is/are composed of glass ceramic material.

6. Device according to one of claims 1 to 5, in which the tray(s) (6) is/are received on a horizontally revolving frame (10), which rests on a lower part (8) that is closed underneath.

7. Device according to claim 6, in which the tray(s) (6) may be snap-fitted to the frame (10) and/or the frame (10) may be snap-fitted to the lower part (8).

8. Device according to claim 6 or 7, in which the dimensions of the frame (10) including the slide rails and/or the lower part (8) corresponds to one or more grids of the gastronomic standard, baking standard or European standard.

9. Device according to one of claims 6 to 8, in which the frame (10) and the lower part (8) are formed with mirror symmetry viewed from the side.

10. Device according to one of claims 6 to 9, in which the frame (10) receives the operating elements (22) and/or their radio receiver and/or the control.

11. Device according to one of claims 6 to 10, in which the lower part (8) receives an electricity supply and/or a cooling fan.

12. Device according to one of claims 6 to 11, in which the lower part (8) has on its underside two mutually parallel runners (16) and in particular adjustable standing feet.

13. Device according to one of claims 1 to 12, in which the Peltier element(s) is/are disposed on the underside of the tray(s) (6) and/or on the underside of the heating element(s).

14. Device according to one of claims 1 to 13, in which the heating of the tray(s) (6) is effected according to the selected temperature and/or the selected temperature cycle with the Peltier element(s).

15. Device according to claim 14, in which the selected temperatures and/or temperature cycles are temperatures or temperature cycles for keeping the food hot.

16. Device according to one of claims 1 to 15, in which the heating of the tray(s) (6) is effected according to the selected temperature and/or the selected temperature cycle with the heating element(s), according to which in particular cooking temperatures of more than 100°C are achievable.

17. Device according to one of claims 1 to 16, in which the heating of the tray(s) (6) is effected according to the selected temperature and/or the selected temperature cycle both by the Peltier element(s) and by the heating element(s).

18. Device according to claim 16 or 17, in which the selected temperatures and/or temperature cycles are temperatures for keeping hot or cooking or are cycles for keeping hot or cooking.

19. Device according to one of claims 1 to 18, in which the cooling of the tray(s) is effected according to the selected temperature and/or the selected temperature cycle with the Peltier element(s).

20. Device according to claim 19, in which the selected temperatures and/or temperature cycles are cooling temperatures or cooling cycles.

## Revendications

1. Dispositif pour tenir des aliments, prêts à être servis, à la disposition, avec
- une ou plusieurs plaques (6) transmettant la chaleur sur lesquelles les aliments peuvent être reçus directement ou dans des récipients, prêts à être servis,
- un ou plusieurs éléments frigorifiques ou analogue et un ou plusieurs éléments de chauffage qui sont ou peuvent être couplés à chaque fois thermiquement à la ou les plaques (6) et/ou aux récipients,
- un ou plusieurs éléments de commande (22) respectivement récepteurs radio d'éléments de commande, au moyen desquels des températures et/ou des cycles de température et/ou des modes chaud ou froid de la ou des plaques (6) peuvent être sélectionnés,
**caractérisé par** une commande apte à commander les combinaisons d'excitation suivantes conformément au choix effectué aux éléments de commande (22) :
- refroidissement de la ou des plaques par le ou les éléments frigorifiques
- échauffement de la ou des plaques par le ou les éléments frigorifiques
- échauffement de la ou des plaques par le ou les éléments frigorifiques et le ou les éléments de chauffage
- échauffement de la ou des plaques par le ou les éléments de chauffage.

2. Dispositif selon la revendication 1, où la ou les plaques (6), sous l'effet du ou des éléments de chauffage, peuvent être chauffées plus rapidement et/ou à des températures plus élevées que seulement avec le ou les éléments frigorifiques.

3. Dispositif selon la revendication 1 ou 2, où le ou les éléments de chauffage sont disposés au côté inférieur de la ou des plaques (6).

4. Dispositif selon l'une des revendications 1 à 3, où le ou les éléments de chauffage sont réalisés comme chauffage par surface et/ou par feuille et/ou par couche mince et/ou par sérigraphie.

5. Dispositif selon l'une des revendications 1 à 4, où la ou les plaques (6) sont en vitrocéramique.

6. Dispositif selon l'une des revendications 1 à 5, où la ou les plaques (6) sont reçues sur un cadre (10) s'étendant horizontalement tout autour, qui repose sur une partie inférieure (8) fermée vers le bas.

7. Dispositif selon la revendication 6, où la ou les plaques (6) peuvent être assemblées par encliquetage avec le cadre (10) et/ou le cadre (10) avec la partie inférieure (8).

8. Dispositif selon la revendication 6 ou 7, où les dimensions du cadre (10) y compris les glissières et/ou de la partie inférieure (8), correspondent à une ou plusieurs trames de la norme gastronomique, de la norme de pâtisserie ou de la norme européenne.

9. Dispositif selon l'une des revendications 6 à 8, où le cadre (10) et la partie inférieure (8), vus de côté, sont réalisés avec une symétrie spéculaire.

10. Dispositif selon l'une des revendications 6 à 9, où le cadre (10) reçoit les éléments de commande (22) et/ou leur récepteur radio et/ou la commande.

11. Dispositif selon l'une des revendications 6 à 10, où la partie inférieure (8) reçoit une alimentation et/ou une soufflerie de refroidissement.

12. Dispositif selon l'une des revendications 6 à 11, où la partie inférieure (8) présente à son côté inférieur deux patins (16) parallèles l'un à l'autre et en particulier des pieds d'appui ajustables.

13. Dispositif selon l'une des revendications 1 à 12, où le ou les éléments frigorifiques sont disposés au côté inférieur de la ou des plaques (6) et/ou au côté inférieur du ou des éléments chauffants.

14. Dispositif selon l'une des revendications 1 à 13, où l'échauffement de la ou des plaques (6) a lieu en fonction de la température sélectionnée et/ou du cycle de températures sélectionné avec le ou les éléments frigorifiques.

15. Dispositif selon la revendication 14, où les températures sélectionnées et/ou les cycles de températures sélectionnés sont des températures de maintien au chaud respectivement des cycles de maintien au chaud.

16. Dispositif selon l'une des revendications 1 à 15, où l'échauffement de la ou des plaques (6) a lieu en fonction de la température sélectionnée et/ou du cycle de températures sélectionné avec le ou les éléments chauffants, où en particulier des températures de cuisson supérieures à 100° C peuvent être atteintes.

17. Dispositif selon l'une des revendications 1 à 16, où l'échauffement de la ou des plaques (16) a lieu en fonction de la température sélectionnée et/ou du cycle de températures sélectionné et par le ou les éléments frigorifiques et aussi par le ou les éléments chauffants.

18. Dispositif selon la revendication 16 ou 17, où les températures sélectionnées et/ou les cycles de températures sélectionnés sont des températures de maintien au chaud ou de cuisson, respectivement des cycles de maintien au chaud ou de cuisson.

19. Dispositif selon l'une des revendications 1 à 18, où le refroidissement de la ou des plaques a lieu en fonction de la température sélectionnée et/ou du cycle de températures sélectionné avec le ou les éléments frigorifiques.

20. Dispositif selon la revendication 19, où les températures sélectionnées et/ou les cycles de températures sont des températures de refroidissement respectivement des cycles de refroidissement.
